## Europäisches Patentamt
## European Patent Office
## Office européen des brevets

(19)

(11) Veröffentlichungsnummer: **0 216 392**
**B1**

(12) **EUROPÄISCHE PATENTSCHRIFT**

(45) Veröffentlichungstag der Patentschrift: **08.08.90**

(51) Int. Cl.⁵: **B 65 G 25/08**

(21) Anmeldenummer: **86113286.8**

(22) Anmeldetag: **26.09.86**

(54) **Behandlungsverfahren für verschiedene Produkte sowie Behandlungsvorrichtung zur Durchführung des Verfahrens.**

(30) Priorität: **27.09.85 US 780835**

(43) Veröffentlichungstag der Anmeldung:
**01.04.87 Patentblatt 87/14**

(45) Bekanntmachung des Hinweises auf die
Patenterteilung:
**08.08.90 Patentblatt 90/32**

(84) Benannte Vertragsstaaten:
**AT BE CH DE FR GB IT LI LU NL SE**

(56) Entgegenhaltungen:
**DE-A-3 206 929**
**US-A-1 581 519**
**US-A-3 062 353**

(73) Patentinhaber: **KNUD SIMONSEN INDUSTRIES LIMITED**
**11 Dansk Court**
**Rexdale, Ontario M9W 5N6 (CA)**

(72) Erfinder: **Buller-Colthurst, Guy Edward**
**3 Dundas Street East**
**Erin Ontario (CA)**

(74) Vertreter: **Feldkamp, Rainer, Dipl.-Ing. et al**
**Patentanwälte Wallach, Koch Dr. Haibach,**
**Feldkamp Postfach 920**
**D-8000 München 33 (DE)**

**Beschreibung**

Die Erfindung bezieht sich auf ein Behandlungsverfahren zur Behandlung von zumindestens zwei getrennten Produkteinheiten oder -posten, die eine erste Produkteinheit und eine zweite Produkteinheit umfassen, in einer Behandlungskammer, wobei das Verfahren die folgenden Schritte umfaßt:

Ausbildung erster Behandlungsbedingungen in zumindestens zwei Zonen der Kammer;

Einführen der ersten Produkteinheit in eine erste der Zonen und Bewegen der ersten Produkteinheit aufeinanderfolgend in schrittweisen Bewegungen durch die ersten und zweiten Zonen entlang einer vorgegebenen Achse, wobei eine Verweilzeit der ersten Produkteinheit in den ersten und zweiten Zonen mit vorgegebenen Zeitgrenzwerten erreicht wird;

Einführen der zweiten Produkteinheit in die erste Zone, während die erste Produkteinheit noch in der zweiten Zone verweilt, und schrittweises Bewegen der zweiten Produkteinheit entlang der gleichen Achse;

sowie auf eine Behandlungsvorrichtung zur Durchführung dieses Verfahrens.

Aus der US-A-3 062 353 ist ein Behandlungsverfahren bzw. eine Behandlungsvorrichtung für die maschinelle Bearbeitung von Werkstücken bekannt, bei dem die einzelnen Produkteinheiten von einer Werkzeugmaschine zur anderen bewegt werden, wobei diese Werkzeugmaschinen unterschiedliche Abstände voneinander aufweisen können. Um den unterschiedlichen Förderweg zwischen den Werkzeugmaschinen mit unterschiedlichen Abständen voneinander ausgleichen zu können, ist eine Fördereinrichtung in Form von zwei Antriebsstangen vorgesehen, die ausgehend von dem Antrieb eines einzigen Antriebselementes über unterschiedliche Wegstrecken bewegt werden können. Jede Produkteinheit ist selektiv mit einer der Antriebsstangen koppelbar, und zwar in Abhängigkeit davon, ob diese Produkteinheit zu einer einen geringen oder größeren Abstand aufweisenden Werkzeugmaschine transportiert werden muß. Die Verweilzeiten der Produkteinheiten an den einzelnen Werkzeugmaschinen sind hierbei gleich, lediglich der Weg, über den die Produkteinheiten von einer Werkzeugmaschine zur anderen bewegt werden, unterscheidet sich.

Zur Verarbeitung von Nahrungsmittelprodukten, Töpferwaren, Metallprodukten und dergleichen unter in einer Behandlungskammer ausgebildeten Bedingungen ist es bekannt, Fördereinrichtungen zum Fördern dieser Produkte in kontinuierlicher oder postenweiser Form zu verwenden. In vielen Fällen wird hierbei eine Kammer mit einer Reihe von verschiedenen Zonen verwendet, in denen verschiedene Bedingungen und Zustände vorliegen.

So ist es aus der US-A-1 561 519 bekannt, bei der Behandlung von Nahrungsmittelprodukten, wie zum Beispiel Fleisch, Geflügel und verarbeitetem Fleisch, wie zum Beispiel Schinken, Picknickfleisch, Schweinebauchspeck, Frühstücksspeck und Würsten, diese Produkte durch eine langgestreckte Behandlungskammer hindurchzubewegen, in der verschiedene Zonen ausgebildet sind, in denen die Produkte einer Luftzirkulationsbehandlung, einer Wasserspüloder Wassersprühbehandlung oder einer Rauchbehandlung unterworfen werden. Die Luft kann entweder angefeuchtet oder entfeuchtet oder geheizt sein oder Rauch oder andere Bestandteile enthalten, oder sie kann zu Kühlzwecken eine verringerte Temperatur aufweisen. In gleicher Weise kann die Wasserspülung oder der Sprühstrahl zu Kochzwecken erhitzt oder zu Kühlzwecken gekühlt sein. Eine kontinuierliche Fördereinrichtung in Form eines umlaufenden Seils ist mit Hilfe von Antriebsseilscheiben antreibbar, um die einzelnen Produkteinheiten in einer gewünschten Weise durch die einzelnen Zonen zu bewegen. Sobald eine erste Produkteinheit die erste Zone der Behandlungskammer verläßt kann eine neue Produkteinheit am Eingang der Behandlungskammer eingeführt und mit den Fördereinrichtungen gekoppelt werden, sodaß sich die einzelnen Produkteinheiten aufeinanderfolgend durch die einzelnen Behandlungszonen hindurchbewegen. Da der Seilantrieb manuell betätigbar war, war es sowohl möglich, die Produkteinheiten kontinuierlich als auch schrittweise durch die einzelnen Behandlungszonen hindurchzubewegen. Die einzelnen Produkteinheiten sind hierbei den Behandlungsbedingungen in den einzelnen Behandlungszonen über eine gleiche Zeitdauer ausgesetzt, sodaß es lediglich möglich ist, eine Produktart zu irgendeiner vorgegebenen Zeit zu behandeln oder zu bearbeiten, zumindestens dann, wenn die Behandlungszeit in den einzelnen Zonen für voneinander verschiedene Produktarten abweichend ist. Damit ist es erforderlich, bei einem Wechsel der Produktart die in der Kammer befindlichen Produkte vollständig durch alle Zonen in der Kammer hindurchzubewegen, worauf nach vollständiger Entleerung der Kammer die Bedingungen in den einzelnen Behandlungszonen und die Geschwindigkeit der Fördereinrichtung geändert werden kann, um die Behandlungsbedingungen an ein anderes produkt anzupassen.

Der Erfindung liegt die Aufgabe zugrunde, ein Behandlungsverfahren bzw. eine Behandlungsvorrichtung der eingangs genannten Art zu schaffen, bei dem bzw. bei der Verzögerungen beim Wechsel von einer Produktart zur anderen weitgehend vermieden werden, so daß die einzelnen Posten von Produkten in unterschiedlicher Weise beliebig behandelt werden können.

Diese Aufgabe wird durch die im kennzeichnenden Teil der Patentansprüche 1 bzw. 5 gelöst.

Vorteilhafte Ausgestaltungen und Weiterbildungen der Erfindung ergeben sich aus den jeweiligen Unteransprüchen.

Bei der erfindungsgemäßen Vorrichtung ist eine Behandlungskammer vorgesehen deren Fördereinrichtung eine getrennte schrittweise Bewegung der einzelnen Produkteinheiten ermöglicht. Auf diese Weise kann ein ersten Posten oder eine erste Einheit eines Produktes mit Hilfe einer Fördereinrichtung mit einer ersten Geschwindigkeit bewegt werden und sobald die erste Zone der Kammer frei von diesem ersten Posten eines Produktes ist, kann ein zweiter Posten eines anderen Produktes in die erste Zone mit Hilfe der zweiten Fördereinrichtung bewegt werden, wobei dieser zweite Posten schrittweise in einer anderen Folge bewegt wird.

Wenn die beiden voneinander verschiedenen Produkte unter den gleichen Bearbeitungsbedingungen in den verschiedenen Zonen behandelt werden können, ist es auf diese Weise möglich, einen ersten Posten einer Produktart gefolgt von ein einem zweiten Posten einer anderen Produktart zu behandeln, wobei sich nur sehr kurze Ausfallzeiten bei der Verwendung der Kammer selbst ergeben.

Wenn es erwünscht ist, die Behandlungsbedingungen für einen Posten eines anderen Produktes zu wechseln, so ist es andererseits möglich, die Bedingungen in einer ersten Zone zu ändern und einen Posten eines zweiten Produktes einzuführen, während ein oder mehrere Posten eines ersten Produktes noch in einer nachfolgenden Zone behandelt werden.

Dies bedeutet, daß eine Behandlungsvorrichtung kleiner oder mittlerer Größe mit niedrigeren Kapitalkosten eine Vielzahl von verschiedenen Produktarten in der Kammer verarbeiten kann, wobei eine stark verringerte oder minimierte Ausfallzeit beim Wechsel von einem Produkt zum anderen entsteht.

Die erfindungsgemäße Behandlungsvorrichtung umfaßt Einrichtungen, die eine kontinuierliche Kammer zur Verarbeitung eines Produktes bilden, wobei die Kammer eine Anzahl von verschiedenen Kammerzonen oder -bereichen aufweist. Es sind Einrichtungen zur Ausbildung unterschiedlicher Behandlungsbedingungen in den verschiedenen Kammerzonen vorgesehen, und eine einzige kontinuierliche Fördereinrichtung erstreckt sich von einem Ende zum anderen durch die Kammer. Es sind Produktseinheit-Halterungseinrichtungen vorgesehen, die an der Fördereinrichtung halterbar sind, um das Produkt in Posten oder Einheiten von einem Ende zum anderen zu bewegen. Eine erste Produkteinheit-Antriebseinheit, die mit einer vorgegebenen ersten Zeitsteuerung betreibbar ist, ist zur Bewegung der Produkteinheiten durch die Kammer mit der vorgegebenen ersten Zeitsteuerung vorgesehen, während eine getrennte zweite Produkteinheit-Antriebseinrichtung, die mit einer zweiten vorgegebenen Zeitsteuerung betreibbar ist, die von der ersten Zeitsteuerung abweicht, zur Bewegung von Produkteinheiten durch die Kammer mit der zweiten vorgegebenen Zeitsteuerung vorgesehen ist. Weiterhin sind Kupplungseinrichtungen vorgesehen, die zwischen den Produkteinheit-Halterungseinrichtungen und den ersten oder den zweiten Antriebseinrichtungen selektiv in Eingriff bringbar sind, so daß die Produkteinheit-Halterungseinrichtungen entweder mit den ersten oder den zweiten Antriebseinrichtungen in Eingriff gebracht werden können. Schließlich sind Steuereinrichtungen vorgesehen, die die ersten und zweiten Antriebseinrichtungen für eine selektive zeitgesteuerte Betriebsweise steuern.

Die erfindungsgemäße Behandlungskammer weist zumindestens zwei Zonen oder Bereiche und Einrichtungen zur Ausbildung vorgegebener voneinander verschiedener Behandlungsbedingungen in jeder dieser Zonen auf.

Bei der erfindungsgemäßen Behandlungskammer weisen die ersten und zweiten Antriebseinrichtungen jeweilige Seite-an-Seite angeordnete Zugstangen, kraftbetätigte Einrichtungen zur selektiven Betätigung der Zugstangen, Anschlageinrichtungen an den Zugstangen und bewegliche Verriegelungseinrichtungen an den Produkteinheit-Halterungen auf, die zwischen zwei Positionen bewegbar sind, wobei sie in einer Position mit den Anschlageinrichtungen der einen Zugstange in Eingriff bringbar sind, während sie in der anderen Position mit den Anschlageinrichtungen der anderen Zugstange in Eingriff bringbar sind.

Gemäß einer bevorzugten Ausgestaltung der Erfindung weist zumindestens eine Zone der Zonen der Behandlungskammer ein Wasserbehandlungssystem auf, das eine Umwälzpumpe, Heiz- oder Kühleinrichtungen zur Regelung der Temperatur des Wassers, einen obenliegenden Flüssigkeitsbehälter, einschließt, der von der Pumpe mit Waser gespeist wird und Öffnungen aufweist, durch die hindurch Wasser nach unten durch den gesamten Bereich der Zone der Kammer strömen kann, so daß Produkteinheiten während ihrer Verweilzeit in diesen Zonen behandelt werden können.

Das erfindungsgemäße Behandlungsverfahren sowie die Behandlungskammer ermöglichen damit die Behandlung getrennter Posten von verschiedenen Produkten in einer gemeinsamen Kammer ohne wesentliche Ausfallzeiten beim Wechsel von einem Produkt zum anderen.

Die Erfindung wird im folgenden anhand von in der Zeichnung dargestellten Ausführungsbeispielen noch näher erläutert.

In der Zeichnung zeigen:

Fig. 1 eine schematische Draufsicht auf eine Ausführungsform der Behandlungskammer, wobei der Dachteil fortgeschnitten dargestellt ist;

Fig. 2 eine schematische Schnittansicht entlang der Linie 2—2 nach Fig. 1, wobei eine erste Zone unter Einschluß des Dachteils gezeigt ist;

Fig. 3 eine der Fig. 2 entsprechende schematische Schnittansicht entlang der Linie 3—3 nach Fig. 1;

Fig. 4 ein stark vergrößerter Schnitt entlang der Linie 4—4 nach Fig. 1;

Fig. 5 eine Seitenansicht eines Teils einer Zugstange;

Fig. 6 eine abgeänderte Ausführungsform.

Die im folgenden beschriebenen Ausführungsformen der Behandlungskammer können zur Verarbeitung und Behandlung einer Vielzahl von verschiedenen Produkten und Gütern verwendet werden. Beispielsweise werden viele verschiedene Nahrungsmittelprodukte in derartigen Kammern behandelt, und andere Produkte, wie z.B. Metallprodukte, Töpferwaren und dergleichen können genauso in der Ausführungsform der Kammer behandelt werden.

Es ist selbstverständlich, daß die Behandlungsbedingungen in den verschiedenen Zonen der Kammer durch die Art der zu behandelnden Güter bestimmt sind. Diese Güter können gebakken, gehärtet, getrocknet, temperiert, geräuchert und gekühlt werden, um lediglich einige wenige Beispiele der verschiedenen Arten von Behandlungsbedingungen zu geben, die für verschiedene Arten von Gütern verwendet werden können.

Im speziellen Fall der dargestellten und im folgenden beschriebenen Ausführungsform ist die Kammer jedoch für die Behandlung von Fleisch- und Geflügelprodukten für den Fleischwarenmarkt bestimmt.

Alle diese Produkte werden im folgenden mit dem Sammelbegriff "Fleischwaren" beschrieben. Beispiele dieser Produkte sind Würste verschiedener Arten, Schinken, Frühstücksspeck, Fleisch-Bruststücke, Schweinebauchstücke, mit Truthahn- oder Hühnerfleisch gefüllte Brotstücke, Schweinefüße und dergleichen. Verschiedene Arten von verarbeitetem Fisch, wie z.B. Räucherfisch, können genauso auf diese Weise behandelt werden.

Einige dieser Produkte werden einfach dadurch behandelt. daß sie unter bestimmten Temperaturund Feuchtigkeitsbedingungen für eine bestimmte Zeitdauer wie z.B. 24 Stunden gespeichert werden. Diese Art von Speicherbehandlung wird bei der Behandlung von typischen ungekochten Würsten, wie z.B. Salami verwendet.

Andere Produkte werden einfach durch eine Kochstufe, auf die eine Kühlstufe folgt, behandelt.

Weitere Produkte werden dadurch behandelt, daß sie zunächst geräuchert, dann gekocht und dann gekühlt werden. Andere Produkte können einfach durch Räuchern ohne irgendeinen Kochvorgang behandelt werden oder ausschließlich in manchen Fällen durch Kühlen.

Fruchtprodukte können ebenso durch einfaches Trocknen ohne Kochen oder Kühlen behandelt werden.

Entsprechend wird im folgenden allgemein auf Nahrungsmittelprodukte Bezug genommen, wobei dieser Begriff Fleisch, Fisch und andere Produkte umfassen soll, die behandelt werden sollen.

Es ist weiterhin von besonderer Bedeutung, daß bei dem erfindungsgemäßen Verfahren sowie der Behandlungskammer die Nahrungsmittel postenweise verarbeitet werden. Dies bedeutet, daß eine große Menge der Produkte zusammengefügt und auf eine Reihe von Regalen oder Haken oder Aufhängungsvorrichtungen gebracht werden kann, die alle zusammen einen Teil einer einzigen Einheit bilden. Eine derartige Einheit kann auf Laufrollen auf einer obenliegenden Förderschiene gehalten sein. Alternativ kann eine derartige Einheit oder ein derartiger Posten auf einem Satz von Rädern stehen, die auf Schienen auf den Boden laufen.

Für die Zwecke dieser Beschreibung wird daher die Be zeichnung "Einheit" für die Bezugnahme auf ein einziges Produkt oder eine Anzahl on Produkten verwendet, die auf einer geeigneten Halterung von irgendeiner gewünschten Art zusammengefügt sind, wobei diese Einheit durch die Kammer als einzige zusammengefaßte Einheit bewegt wird.

Diese Art der Behandlung weist mehrere bedeutende Vorteile gegenüber früheren Formen von Behandlungskammern auf. Bei vielen früheren Formen von Behandlungskammern wurde eine langgestreckte oder tunnelartige Struktur gebaut, durch die hindurch ein Fördersystem verläuft, das sich kontinuierlich bewegt. Das Fördersystem war unter mit Abständen voneinander angeordneten Haken versehen und einzelne Produkte oder Produktmengen wurden an jedem Haken aufgehängt und kontinuierlich durch die Kammer bewegt.

Weil es zur befriedigenden Behandlung irgendeines bestimmten Produktes erforderlich ist, daß dieses für eine bestimmte Zeit unter bestimmten vorgegebenen Temperatur- (oder anderen) Bedingungen gehalten wird, muß entweder die Fördereinrichtung extrem langsam laufen oder der Kammertunnel muß mit einer sehr großen Länge ausgebildet werden. Zusätzlich zu diesem naheliegenden Nachteil der bekannten Behandlungskammern wiesen diese aufgrund ihrer Eigenart Beschränkungen hinsichtlich der Art von Produkten auf, die behandelt werden konnten.

In vielen Fällen wünscht der Verwender der Behandlungsvorrichtung die Behandlung einer Produktart beispielsweise während einer ersten Schicht des Tages und er will dann während einer zweiten Schicht auf eine zweite Produktart überwechseln. Diese beiden Produkte können voneinander verschiedene Behandlungsbedingungen oder unterschiedliche Verweilzeiten oder beides erfordern.

Bei tunnelförmigen Kammern mit kontinuierlich arbeitenden Fördereinrichtungen war es erforderlich, zu warten, bis die erste Produktart aus der gesamten Förderlinie entfernt war, bevor die Bedingungen in dem Tunnel geändert und das neue Produkt eingeführt werden konnte.

Dies führte zu einer erheblichen Ausfallzeit, wodurch ein Produktwechsel äußerst aufwendig und verlustreich wurde.

Ein weiterer Nachteil, der sich in vielen Fällen bei bestimmten Konstruktionen von tunnelartigen Kammern ergab, bestand in der Schwierigkeit, genaue Toleranzen hinsichtlich der Behandlungsbedingungen aufrechtzuerhalten. Weil jede Zone des Tunnels eine große Länge aufwies, konnte es erforderlich sein, eine Vielzahl von Meßeinrichtungen über die Länge jeder Zone vorzusehen, und es war eine große Anzahl von speziell ausgebildeten Geräten erforderlich, um die Bedingungen über die gesamte Länge der Zone auf dem gewünschten Wert zu halten.

Es wurde festgestellt, daß alle diese Probleme wesentlich verringert, wenn nicht sogar vollständig beseitigt werden können, indem eine Postenbehandlung anstelle einer sich kontinuierlich bewegenden Produktlinie verwendet wird.

Bei einer Postenbehandlungs-Kammer, wie sie im folgenden näher erläutert wird, kann ein Posten eines Produktes in eine Zone eingeführt und dann einfach während seiner Behandlungszeit in dieser Zone stationär gehalten werden. Sobald diese Zeit abgelaufen ist, kann der Posten zur nächsten Zone bewegt werden und dann einfach in dieser Zone zum Stillstand gebracht werden usw..

Dies bedeutet, daß die gesamte Kammerstruktur wesentlich kürzer ausgebildet sein kann und größere Querschnittsabmessungen aufweisen kann. Jeder Posten eines Produktes kann als eine Einheit auf einer einzigen Halterung mit erheblicher Größe zusammengeführt werden. Alle Produkte in diesem Posten werden dann gleichzeitig unter absolut identischen Bedingungen behandelt, was zu einer wesentlich größeren Gleichförmigkeit der Qualität des Endproduktes führt.

Weil die Zonen kompakter sind, können die Behandlungsbedingungen mit genaueren Toleranzen aufrechterhalten werden und die Konstruktion der Geräte in jeder Zone kann wesentlich wirkungsvoller sein.

Weil jeder Produktposten als einzige Einheit aus einer Zone entfernt und in eine andere Zone überführt wird und weil die Halterungseinrichtungen für die einzelnen Posten voneinander getrennt und nicht miteinander verbunden sind, bedeutet dies, daß es wesentlich einfacher ist, von einer Produktart auf eine andere zu wechseln, während sich die erste Produktart noch in der Kammer befindet.

Damit wird eine wesentlich größere Flexibilität und ein wirkungsvollerer Betrieb mit wesentlich geringeren Kapitalinvestitionen erreicht.

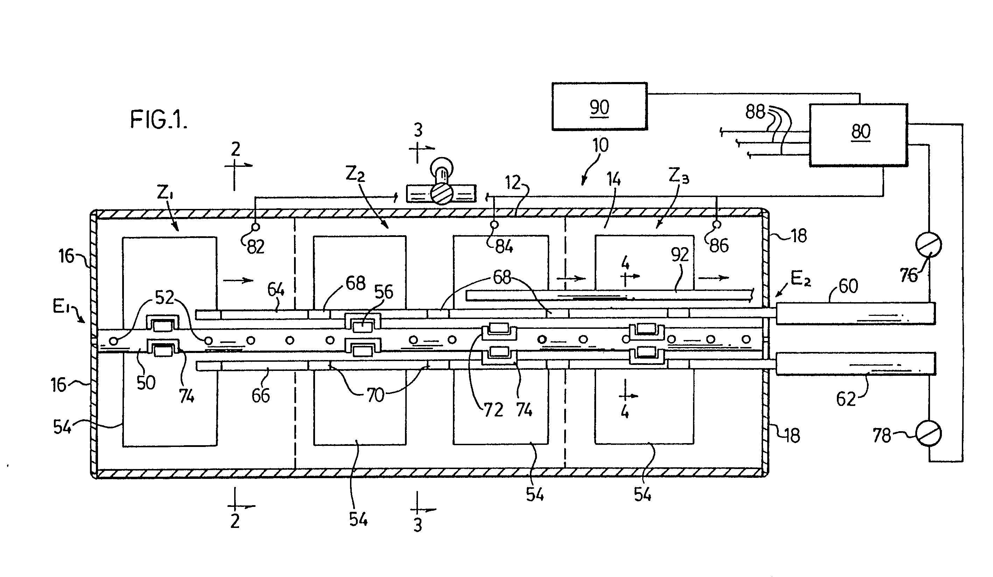

In Fig. 1 ist eine Ausführungsform der Behandlungskammer schematisch mit 10 bezeichnet. Die Kammer weist drei Zonen auf, die mit Z1, Z2 und Z3 bezeichnet sind und das Produkt bewegt sich von links nach rechts vom Eingang E1 zum Ausgang E2.

Die Kammer 10 ist mit durchgehenden Seitenwänden 12, einem Boden 14, Eingangstüren 16 und Ausgangstüren 18 ausgebildet. Typischerweise sind die Wände 12 isoliert und auch die Türen 16 und 18 würden normalerweise isoliert sein und die Türen sind selbstverständlich beweglich, damit sie in geeigneter Weise geöffnet und geschlossen werden können, beispielsweise dadurch, daß sie gelenkig befestigt sind oder verschiebbar sind.

Alternativ kann es bei bestimmten Konstruktionen möglich sein, Luftvorhang-Türen bekannter Konstruktion zu verwenden (die aus Gründen der Klarheit nicht dargestellt sind), um die Türen 16 und 18 zu ersetzen.

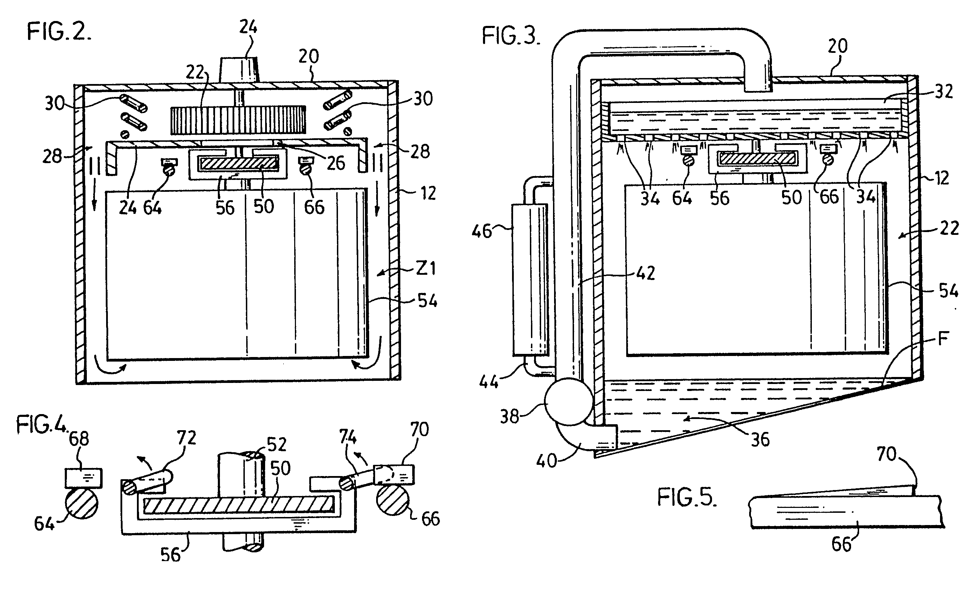

Wie dies aus den Fig. 2 und 3 zu erkennen ist, ist ein kontinuierliches Dach 20 gezeigt und unterhalb des Daches 20 sind Vorrichtungen zur Erzielung geeigneter Behandlungsbedingungen angeordnet, wobei diese Vorrichtungen sich von Zone zu Zone und von Behandlung zu Behandlung ändern.

So weisen gemäß Fig. 2 die Behandlungsbedingungsvorrichtungen in der Zone Z1 ein durch einen Motor 24 angetriebenes Gebläse 22 auf, das benachbart zu einer Prallplatte oder einer abgehängten Decke 25 arbeitet. Die abgehängte Decke 25 weist eine Mittelöffnung 26 auf und umgrenzt Seitenöffnungen 28—28, die mit geeigneten Luftleitschaufeln oder dergleichen von bekannter Art versehen sein können.

Von dem Gebläse 22 angetriebene Luft tritt durch Auslaßöffnungen 29 aus und strömt nach unten durch die Zone, worauf sie nach oben durch die Mittelöffnung 26 auf einer kontinuierlichen Umlaufbahn zurückkehrt.

Auf diese Weise kann die gesamte Zone kontinuierlich und vollständig belüftet werden.

Typischerweise wird die Luft in dieser Zone in irgendeiner Weise behandelt oder temperiert, beispielsweise durch Temperiereinheiten 30. Die Temperiereinheiten 30 können die Luft aufheizen, kühlen oder sie können die Feuchtigkeit dadurch steuern, daß sie sie entweder erhöhen oder absenken, oder sie können verschiedene Arten von künstlichem Rauch zur Aromatisierung des Produktes einführen.

Die Einzelheiten solcher Temperier- oder Vergütungseinheiten sind in der Technik gut bekannt und erfordern keine weitere Beschreibung.

Im vorliegenden Fall stellen sie typischerweise Rauchgeneratoren zur Einführung von künstlichem Rauch in die zirkulierende Luft ein, so daß eine Räucher- und Trocknungsatmosphäre in der Zone Z1 ausgebildet wird.

Wie dies weiter oben erläutert wurde, könnten die Temperier- und Behandlungseinheiten 30 auch von einer solchen Art sein, daß sie andere Atmosphären in der Zone Z1 erzeugen, und sie sind daher an dieser Stelle lediglich als schematische Erläuterung ohne jede Einschränkung gedacht.

In Fig. 3 ist die Zone Z2 gezeigt, wobei diese Zone zu Erläuterungszwecken und ohne jede Einschränkung so dargestellt ist, daß sie ein Heißwasser-Behandlungssystem aufweist, das einen obenliegenden Flüssigkeitstank 32 aufweist, der unterhalb des Daches 20 angeordnet und mit einer Vielzahl von Auslaßöffnungen 34 versehen ist. Die Zone Z2 weist einen mit F bezeichneten Boden auf, der mit einer Neigung ausgebildet ist, so daß er einen Sammenbehälter 36 bildet.

Eine Umwälzpumpe 38 ist über Rohre 40 mit dem Sammelbehälter 36 verbunden. Der Ausgang der Pumpe 38 speist ein Hauptrohr 42 und ein Zweigrohr 44. Das Hauptrohr 42 führt zum Dach 20 zurück, um Wasser in den obenliegenden Flüssigkeitsbehälter 32 einzuspeisen. Die Zweigleitung 44 leitet einen Teil des Wassers durch einen Wärmetauscher 46. Auf diese Weise wird dem Flüssigkeitsbehälter 32 eine konstante Strömung von heißem Wasser mit einer erhöhten Temperatur (oder gekühltes Wasser) zugeführt, wobei sich dieses Wasser dann strömungsabwärts durch die Vielzahl von Öffnungen 34 über den Bereich der Zone 22 ergießt und sich erneut in dem Sammelbehälter 36 sammelt.

Dieses sogenannte Wasserbehandlungssystem ermöglicht es daher der Behandlungsvorrichtung, die Produkte in den Zonen Z2 einer Erwärmung oder Kühlung zu unterwerfen, und zwar in Abhängigkeit von der Art der Behandlung und der Art des Produktes.

Als Heizmedium für Nahrungsmittelprodukte wie z.B. behandeltes Fleisch, ist ein flüssiges Medium wie z.B. Wasser besonders vorteilhaft. Die Verwendung eines massiven Umwälzsystems wie dieses mit einer einen relativ niedrigen Druck, jedoch ein hohes Volumen aufweisenden Pumpe 38 ergibt ein sehr wirkungsvolles Verfahren zur Verarbeitung von Nahrungsmittelprodukten. Insbesondere stellt das sehr hohe Volumen des Wassers, das kontinuierlich durch die Zone Z2 strömt, sicher, daß alle Produkte fast gleichzeitig auf die gleiche Temperatur gebracht werden, wobei sich ein sehr hohes Ausmaß der Temperatursteuerung über alle Produkte innerhalb der Zone Z2 ergibt. Tatsächlich ist es möglich, sicherzustellen, daß der Temperaturabfall der Wassertemperatur zwischen dem oberen Bereich der Zone Z2 und dem unteren Bereich nicht mehr als 1 Grad beträgt.

Obwohl die Zone Z2 als "Heißwasser"-Zone zum Kochen beschrieben wurde, könnte in dieser Zone genauso gut gekühltes Wasser verwendet werden und die Zone Z2 würde dann das Produkt in einer sehr wirkungsvollen Weise kühlen.

Die Zone Z3, die nicht im einzelnen im Schnitt dargestellt ist, kann entweder mit einem Luftumwälzsystem gemäß Fig. 2 oder einem Wasserumwälzsystem gemäß Fig. 3 versehen werden, und zwar typischerweise für den Zweck der Kühlung der Produkte. Wenn jedoch irgendeine andere Form der Behandlung in der Zone Z3 erforderlich ist, so kann diese mit einem vollständig anderen System zur Ausbildung eines vorgegebenen Zustandes in dieser Zone versehen sein.

In jedem Fall sind die Einzelheiten der Vorrichtung zur Erzielung vorgegebener Bedingungen in dieser Zone nicht dargestellt, weil sie sich sehr stark ändern können und dem Fachmann gut bekannt sind.

Obwohl drei Zonen in Fig. 1 dargestellt sind, kann die Anzahl dieser Zonen in Abhängigkeit von den Behandlungsbedingungen, der Produktart und dergleichen veränderlich sein.

Um die Posten oder Einheiten von Produkten durch die Zonen zu bewegen, ist ein schrittweise arbeitendes oder Post-Fördersystem vorgesehen. Ein derartiges Fördersystem umfaßt bei der hier dargestellten Ausführungsform eine einzige durchgehende oben angeordnete Schiene 50, die in einer geeigneten Weise in der Mitte in den oberen Bereichen der Kammer 10 aufgehängt ist, beispielsweise mit Pfosten 52.

Die Produkthalterungen sind lediglich als Würfel 54 dargestellt. In der Praxis sind diese Halterungen jedoch typischerweise durch ein System von Haken oder Regalen oder Trägern oder dergleichen gebildet, auf denen die für die Behandlung vorbereiteten Produkte gehaltert sind.

Typischerweise weisen die Halterungen die Form eines Käfigs aus Stangen oder Balken oder dergleichen auf und in vielen Fällen können die Produkte zunächst in Gruppen oder Längenabschnitten auf anderen Halterungseinrichtungen angeordnet werden, die dann an der Halterungseinrichtung 54 befestigt oder aufgehängt werden. Verschiedene unterschiedliche Formen von Halterungseinrichtungen können zur Halterung von Produkten verwendet werden. Für den speziellen Fall von Nahrungsmitteln wie z.B. miteinander verbundenen Würsten, ist eine typischer Halterungseinrichtung in der US-PS 3 594 858 gezeigt.

Die Verwendung derartiger Aufhängungs- oder Halterungseinrichtungen für die Produkte ermöglicht es, daß die Produkte, wie z.B. Würste, von einer Wurst-Stopfmaschine in Schleifen angeordnet werden, die ein Gewicht aufweisen, das zweckmäßigerweise zu handhaben ist, und jede Aufhängungsvorrichtung mit daran angeordneten Wurst-Schleifen würde dann in geeignete Haken auf der Halterungseinrichtung 54 eingehängt.

Die Produkthalterung 54 weist eine Laufkatze 56 auf, die über die Schiene 50 geschoben werden kann. Eine Reibung verringernde Einrichtungen wie z.B. Räder oder dergleichen (nicht gezeigt) können zur Verbesserung des Gleitens entlang der Schiene verwendet werden.

Um die beladene Halterung 54 entlang der Schiene 50 zu bewegen, sind zwei getrennte Antriebssysteme vorgesehen.

Bei der gezeigten Ausführungsform umfassen die beiden Antriebssysteme die Druckluftzylinder 60 und 62, die Seite an Seite am strömungsabwärts gelegenen oder Austrittsende E2 der Kammer 10 befestigt sind. Jeder Zylinder 60 und 62 weist eine langgestreckte Zugstange 64, 66 auf. Die Zugstange 64 des Zylinders 60 ist mit einem (nicht gezeigten) Kolben im Zylinder 60 verbunden, so daß die Betätigung des Zylinders 60 eine Hin- und Herbewegung der Zugstange 64 in der einen oder anderen Richtung hervorruft, und das gleiche gilt für die Zugstange 66 und den Zylinder 62.

Die Zugstangen 64 und 66 erstrecken sich fast über die gesamte Länge der Kammer 10 und sie sind parallel und Seite an Seite zueinander auf gegenüberliegenden Seiten der Förderschiene 50 angeordnet.

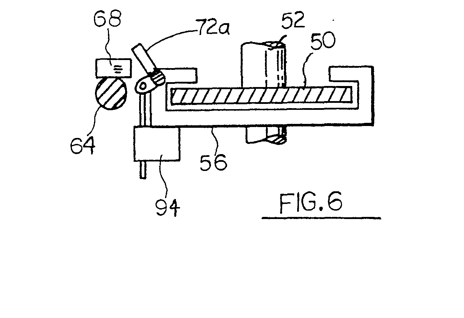

Jede der Zugstangen 64 und 66 ist mit selektiv betätigbaren Eingriffseinrichtungen für den Eingriff mit den Laufkatzen 56 oder den Halterungen 54 versehen. Bei der dargestellten Ausführungsform sind sind diese Eingriffseinrichtungen als eine Reihe von Anschlagblöcken 68, 70 dargestellt. Sie sind bei dieser Ausführungsform allgemein keilförmig (Fig. 5) ausgebildet, um eine Rampenoberfläche zu bilden und sie sind unter Abständen entlang der Länge jeder der Zugstangen 64 und 66 angeordnet.

Jede der Laufkatzen 56 der Halterungseinheiten 54 ist mit beweglichen Verriegelungsteilen 72 und 74 versehen, die schwenkbar auf den Laufkatzen 56 befestigt sind und die von links nach rechts (Fig. 4) verschwenkbar sind.

Die Verriegelungsteile können mit Hilfe nicht gezeigter Einrichtungen miteinander verbunden sein, so daß sie zusammen verschwenkt werden.

Die Schwenkbewegung der Verriegelungsteile 72 und 74 ist derart, daß sie entweder auf der Zugstange 64 oder auf der Zugstange 66 in einer leicht nach oben geneigten Position aufliegen.

Dies stellt lediglich eine Ausführungsform eines Eingriffs zwischen den Laufkatzen und den Zugstangen dar. Andere Formen von Eingriffs- oder Kupplungseinrichtungen könnten genauso vorgesehen sein und diese könnten eine bewegliche Eingriffsart aufweisen oder nicht. Beispielsweise könnten die Laufkatzen 56 in zwei unterschiedlichen Konstruktionen ausgebildet sein, von denen eine auf der einen Seite und die andere auf der anderen Seite in Eingriff bringbar ist.

Nicht gezeigte Halterungseinrichtungen können für die Zugstangen 64, 66 vorgesehen sein, um diese an ihrem Platz zu halten.

Die Zylinder 60 und 62 werden durch Ventile 76, 78 und ein Steuergerät 80 gesteuert. Das Steuergerät 80 ist typischerweise außerdem mit den Zonenmeßfühlern 82, 84 und 86 verbunden, um die Bedingungen in diesen Zonen zu messen.

Das Steuergerät 80 ist typischerweise außerdem mit den Einheiten zur Herstellung geeigneter Bedingungen in den Zonen über Leitungen 88 verbunden. Dem Steuergerät 80 werden anfängliche Informationen von einer Eingabekonsole 90 zugeführt.

Die Einzelheiten des Steuergerätes 80 und der Zonenmeßfühler, der Steuereinrichtungen für die Behandlungsbedingungen und der Konsole sind aus Gründen der Klarheit fortgelassen und sie können von einer Einheit zur anderen stark verschieden sein. In jedem Fall sind derartige Einrichtungen und Geräte jedoch für den Fachmann gut bekannt.

Eine weitere Zugstange 92 und ein (nicht gezeigter) Zylinder können für den Eingriff mit Halterungen 54 in den strömungsabwärts gelegenen Zonen Z2, Z3 usw. vorgesehen sein. Dies ermöglicht es der Bedienungsperson, einen Wechsel in manchen Fällen schneller durchzuführen.

Die Eingriffseinrichtungen und der Zylinder sind aus Gründen der Klarheit fortgelassen.

Wenn es im Betrieb beispielsweise erwünscht ist, ein Nahrungsmittel wie z.B. eine Art von Wurst für eine erste Schicht zu behandeln und dann in einer weiteren Schicht auf eine zweite Produktart, wie z.B. Frühstücksfleisch überzuwechseln, so wird die notwendige Programminformation für das erste Produkt an der Konsole 90 in das Steuergerät 80 eingegeben und die Zonenbedingungen in den Zonen Z1, Z2 und Z3 werden ausgebildet und stabilisiert.

Das entsprechende Wurstprodukt wird dann auf eine Produkteinheit-Halterung 54 geladen, die dann an dem Zoneneingang E1 auf die Führungsschiene 50 aufgesetzt wird. Die beladene Halterung 54 wird dann in die Zone Z1 geschoben oder sie kann in einfacher Weise durch die Betätigung des Zylinders 60 in der weiter unten beschriebenen Weise hineingezogen werden.

Sobald die Posten oder Produkteinheit-Halterung 54 in die Zone Z1 eingeführt wurde. werden die Türen 16 geschlossen und die Bedienungsperson gibt ein Signal an das Steuergerät ab, das die Behandlung des ersten Postens begonnen hat.

Es sei für die Zwecke dieser Beschreibung angenommen, daß bei der Einführung der ersten Postenhalterung 54 die Verriegelungteile 72, 74 nach rechts gemäß Fig. 4 verschwenkt wurden.

Als Ergebnis der programmierten Information betätigt das Steuergerät 80 dann das Ventil 78 derart, daß der Zylinder 62 eine bestimmte Anzahl von Betätigungsperioden pro Stunde ausführt. Dies können beispielsweise 1 oder 2 Betätigungsperioden pro Stunde sein. Sobald die Postenhalterung 54 in der ersten Zone Z1 für eine geeignete Zeit stationär gehalten wurde, führt der Zylinder 62 eine Betätigungsperiode aus. Dies führt dazu, daß die Zugstange 66 ausgefahren und dann eingezogen wird.

Beim Ausfahren der Zugstange 66 bewegt sich der Anschlag 70 unter das Verriegelungsteil 74. Das Verriegelungsteil 74 gleitet einfach über der Rampe des Anschlags 70 nach oben und fällt dann erneut nach unten.

Die Zugstange 66 wird dann eingezogen und dies führt dazu, daß die erste Postenhalterung 54 sich über die Länge einer Periode der Zugstange 66 bewegt.

In Abhängigkeit von den Variablen der erforderlichen Behandlung kann es auch erwünscht sein, die Postenhalterung 54 an diesem Punkt vollständig aus der Zone Z1 herauszubewegen und sie in die Zone Z2 einzuführen. Dies kann beispielsweise zwei Betriebsperioden oder Bewegungsschritte der Zugstange 66 und des zugehörigen Zylinders 62 erfordern, bevor sich die Postenhalterung 54 aus der Zone Z1 in die Zone Z2 bewegt hat.

Alternativ kann das Programm derart sein, daß eine größere Verweilzeit in der Zone Z1 erforderlich ist, und in diesem Fall gibt das Programm einen Befehl für eine einzige Betätigungsperiode der Zugstange 66, was dann lediglich dazu führt, daß die Postenhalterung 54 sich von der ersten Position zu einer zweiten Position innerhalb der Zone Z1 bewegt.

Es ist wiederum zu erkennen, daß viele Variablen zu berücksichtigen sind, und zwar unter Einschluß der Länge der Zonen, der Größe der Posten, des Programms für die Behandlungsbedingungen für die spezielle Produktart sowie der konstruktiven Auslegung der gesamten Anlage unter Einschluß der Länge der Zylinder 60 und 62.

In jedem Fall kann jedoch nach der Bewegung der ersten Postenhalterung 54 die zweite Postenhalterung mit einem Produkt geladen und dann in die Behandlungsvorrichtung eingeführt werden, und zwar einfach dadurch, daß die Türen 16 geöffnet werden und die Laufkatze 56 der zweiten Postenhalterung auf die Schiene 50 aufgesetzt wird.

Unter der Annahme, daß die Produkte die gleichen sind wie bei dem vorhergehenden Posten, werden die Verriegelungsteile 72, 74 zur gleichen Seite verschwenkt.

Beim Aufhängen jeder frisch beladenen Postenhalterung 54 auf die Schiene werden unter der Annahme, daß die Produkte alle identisch sind und identische Behandlungsbedingungen erfordern, alle Verriegelungsteile 72, 74 zur gleichen Seite hin verschwenkt.

Wenn es erwünscht ist, ein zweites Produkt zu behandeln, das andere Behandlungs-Verweilzeiten oder andere Behandlungsbedingungen in den Zonen oder beides benötigt, so wird die nächste Postenhalterung 54, die mit der zweiten Produktart beladen ist, angehoben und an der Schiene 50 angebracht, doch werden in diesem Fall die Verriegelungsteile 72, 74 nach links verschwenkt.

Dies bringt die Verriegelungsteile in die Nähe der Zugstange 64, die von dem Zylinder 60 betätigt wird. Bei Eingabe der entsprechenden Programminformation über die Konsole 90 steuert das Steuergerät 80 dann über das Ventil 76 den Zylinder 60 an, so daß dieser zu geeigneten Zeitpunkten Betätigungsperioden ausführt.

Auf diese Weise können, während die Posten oder Einheiten des ersten Produktes graduell die Kammer 10 verlassen, Posten oder Einheiten des zweiten Produktes bereits eingeführt werden, und zwar mit einem Minimum von Ausfallzeit und Verzögerung.

Es ist zu erkennen, daß es in manchen Fällen erforderlich ist, einen etwas größeren Abstand entlang der Schiene 50 zwischen dem letzten Posten des alten Produktes und dem ersten Posten des neuen Produktes vorzusehen, während in anderen Fällen nur ein geringer oder kein Abstand erforderlich sein wird.

Wenn beispielsweise die zweite Art von Produkt abweichende Behandlungsbedingungen erfordert, so müssen die Bedingungen in einer oder mehreren der Zonen geändert werden. Dies beinhaltet, daß alle Teile des ersten Produktes aus der zu ändernden Zone herausbewegt werden müssen. Dann können die neuen Behandlungsbedingungen in das Steuergerät eingegeben werden. Hierbei ergibt sich eine gewisse Verzögerung, während der sich die neuen Bedingungen stabilisieren.

Die Posten oder Einheiten des zweiten Produktes können dann eingeführt und unter den neuen Bedingungen behandelt werden.

Es ist damit zu erkennen, daß durch die Anwendung des beschriebenen Verfahrens sowie der Behandlungsvorrichtung Produkte von unterschiedlicher Art in der gleichen Gesamt-Behandlungskammer-Einrichtung bei ihrem Transport auf der gleichen einzigen Förderlinie unter unterschiedlichen Behandlungsbedingungen oder Verweilzeiten innerhalb der Behandlungsbedingungen in den verschiedenen Zonen der Kammer verarbeitet oder behandelt werden können.

Es ist selbstverständlich, daß, obwohl die Ausführungsform anhand einer oben angeordneten Förderschiene und daran aufgehängten Produkt- oder Postenhalterungen 54 beschrieben wurde, das gleiche Verfahren mit einer Vorrichtung durchführbar ist, die (nicht gezeigte) Bodenschienen und Postenhalterungen aufweist, die auf Rädern gehaltert sind, die auf diesen Schienen laufen.

In diesem Fall würden selbstverständlich die beiden Fördersysteme an einer anderen Stelle bewegt und betrieben werden, doch sind die Grundgedanken der Erfindung auch auf diese Art von Betrieb anwendbar.

Obwohl die Zone Z1 in Verbindung mit einem Luftumwälzsystem beschrieben wurde, während die Zone Z2 ein Wasserumwälzsystem aufweist, ist die beschriebene Vorrichtung weder auf diese Systeme noch auf diese Konfiguration der Systeme beschränkt. 2, 3 oder mehr Zonen könnten alle Luft- oder Wassersysteme aufweisen oder es könnte eine Kombination dieser Systeme in irgendeiner Reihenfolge verwendet werden.

Es ist verständlich, daß irgendeine Zone so ausgebildet werden kann, daß sie sowohl Luft- als auch Wassersysteme aufweist, die selektiv zur Erzielung einer größeren Flexibilität verwendet werden können.

Andere Behandlungssysteme wie z.B. Dampfsysteme, Strahlungssysteme, Ultraviolett-Behandlungen und dergleichen können für spezielle Anwendungen vorgesehen sein.

Obwohl im Vorstehenden auf zwei Antriebseinrichtungen Bezug genommen wurde, ist verständlich, daß dies lediglich ein Beispiel darstellt, um das erfindungsgemäße Verfahren auszuführen.

Beliebige Einrichtungen, mit deren Hilfe verschiedene Produktposten selektiv mit unterschiedlicher Zeitsteuerung in der Kammer bewegt werden können, können ohne weiteres verwendet werden. So können beispielsweise die Verriegelungsteile 72 und 74 mit irgendeiner Form einer elektrischen oder mechanischen Betätigung oder Steuereinrichtung versehen werden.

Auf diese Weise können die Verriegelungsteile außer Eingriff bewegt und dann in ihre Position nur dann abgesenkt werden, wenn es für den speziellen Posten des Produktes erforderlich ist, sich zu bewegen.

Auf diese Weise könnte einer der Zylinder 60 oder 62 und die zugehörige Zugstange vollständig fortgelassen werden. Gleichzeitig könnte auch das eine oder das andere Verriegelungsteil 72, 74 fortgelassen werden.

Eine allgemeine Anordnung eines derartigen Systems ist in Fig. 6 gezeigt. Bei dieser Darstellung ist zu erkennen, daß lediglich eine Zugstange 64 und ein Zylinder 60 sowie ein Verriegelungsteil 72a vorgesehen ist. Das Verriegelungsteil 72a wird durch einen ferngesteuerten elektrischen Betätigungskasten 94 betätigt, der unter der Steuerung des Steuergerätes 80 so betätigt werden kann, daß er das Verriegelungsteil 72a hin- und her- und damit in und außer Eingriff mit der Rampe 68 auf der Zugstange 64 verschwenkt.

Alternativ kann der Betätigungskasten 94 durch Luftdruck oder durch magnetische Impulse betätigt werden.

Es ist damit zu erkennen, daß die beschriebene Ausführungsform nicht ausschließlich auf die Verwendung von zwei getrennten Antriebseinrichtungen beschränkt ist.

**Patentansprüche**

1. Behandlungsverfahren zur Behandlung von zumindestens zwei getrennten Produkteinheiten oder -posten, die eine erste Produkteinheit und eine zweite Produkteinheit umfassen, in einer Behandlungskammer, wobei das Verfahren die folgenden Schritte umfaßt:

Ausbildung erster Behandlungsbedingungen in zumindestens zwei Zonen der Kammer;

Einführen der ersten Produkteinheit in eine erste der Zonen und Bewegen der ersten Produkteinheit aufeinanderfolgend in schrittweisen Bewegungen durch die ersten und zweiten Zonen entlang einer vorgegebenen Achse, wobei eine Verweilzeit der ersten Produkteinheit in den ersten und zweiten Zonen mit vorgegebenen Zeitgrenzwerten erreicht wird;

Einführen der zweiten Produkteinheit in die erste Zone, während die erste Produkteinheit noch in der zweiten Zone verweilt, und schrittweises Bewegen der zweiten Produkteinheit entlang der gleichen Achse;

dadurch gekennzeichnet, daß die erste Produkteinheit aus der zweiten Zone herausbewegt wird, während die zweite Produkteinheit noch in der ersten Zone verweilt, daß nachfolgend die zweite Produkteinheit in die zweite Zone bewegt wird, wodurch ein Verweilen der ersten Produkteinheit in den ersten und zweiten Zonen für vorgegebene erste Verweilzeiten und ein Verweilen der zweiten Produkteinheit in den ersten und zweiten Zonen für vorgegebene zweite Verweilzeiten erreicht wird, die von den ersten Verweilzeiten abweichen.

2. Verfahren nach Anspruch 1, gekennzeichnet durch die Schritte der Ausbildung von Wasserberieselungs-Behandlungsbedingungen mit einer vorgegebenen Temperatur in zumindestens einer der Zonen der Kammer.

3. Verfahren nach Anspruch 1 oder 2, gekennzeichnet durch die Schritte der Ausbildung einer eine kontinuierliche Bewegung ausführenden Einrichtung entlang der Achse, der Bewegung dieser Einrichtung in vorgegebenen zeitgesteuerten Schritten, und des selektiven Kuppelns der Produkteinheiten mit der Einrichtung unter zeitgesteuerten Intervallen zur Erzielung einer Bewegung der Produkteinheit in zeitgesteuerten Intervallen.

4. Verfahren nach einem der vorhergehenden Ansprüche, gekennzeichnet durch die Schritte der Entfernung der ersten Produkteinheit aus der ersten Zone, der Änderung der Behandlungsbedingungen in der ersten Zone und der Einführung der zweiten Produkteinheit in die erste Zone.

5. Behandlungsvorrichtung zur Durchführung des Verfahrens nach einem der Ansprüche 1—4, mit

Kammereinrichtungen (10) mit einer Anzahl von Kammer-Zonen (Z1, Z2, Z3),

Einrichtungen (22, 38, 40, 42, 44, 46) zur Ausbildung vorgegebener Behandlungsbedingungen in den einzelnen Kammer-Zonen, kontinuierlichen Fördereinrichtungen (50), die sich durch die Kammer-Zonen erstrecken und eine einzige Förderachse bilden,

Produkteinheit-Halterungseinrichtungen (56), die an den Fördereinrichtungen (50) unter Abständen halterbar sind, um Produkteinheiten (54) durch die Kammer-Zonen zu bewegen,

Produkteinheit-Antriebseinrichtungen (60, 64, 62, 66), die schrittweise in vorgegebenen Zeitintervallen betätigbar sind, um die Produkteinheiten (54) entlang der Achse der Fördereinrichtungen (50) in vorgegebenen Zeitintervallen zu bewegen,

dadurch gekennzeichnet, daß Eingriffseinrichtungen (72, 74) selektiv zwischen den Produkteinheit-Halterungseinrichtungen (56) und den Antriebseinrichtungen (60, 64, 66) in Eingriff bringbar sind, so daß die Produkteinheit-Halterungseinrichtungen (56) entweder bei den ersten oder bei zweiten Zeitintervallen bewegbar sind, die von den ersten Zeitintervallen abweichen, derart, daß ein Verweilen der ersten Produkteinheit (54) in einer vorgegebenen Kammer-Zone für eine vorgegebene erste Verweilzeit und ein Verweilen der zweiten Produkteinheit in der gleichen Kammer-Zone für eine vorgegebene zweite Verweilzeit erreichbar ist, die von der ersten Verweilzeit abweicht, und daß Steuereinrichtungen (80) zur Steuerung der Antriebseinrichtungen für eine selektive zeitgesteuerte Betätigung vorgesehen sind.

6. Vorrichtung nach Anspruch 5, dadurch gekennzeichnet, daß zumindestens zwei Zonen (Z1, Z2, Z3) vorgesehen sind, und daß jede Zone Einrichtungen (22, 38, 40, 42, 44, 46) zur Ausbildung einer vorgegebenen Behandlungsbedingung in der Zone aufweist.

7. Vorrichtung nach Anspruch 5 oder 6, dadurch gekennzeichnet, daß getrennte erste und zweite Antriebseinrichtungen (60, 64, 62, 66) vorgesehen sind, daß die ersten Antriebseinrichtungen (60, 64) mit den Eingriffseinrichtungen (72, 74) in Eingriff bringbar sind, um eine erste Produkteinheit zu den ersten Zeitintervallen zu bewegen, und daß die zweiten Antriebseinrichtungen (62, 66) mit den Eingriffseinrichtungen (72, 74) einer zweiten Produkteinheit in Eingriff bringbar sind, um die zweite Produkteinheit bei den zweiten Zeitintervallen zu bewegen.

8. Vorrichtung nach Anspruch 7, dadurch gekennzeichnet, daß die ersten und zweiten Antriebseinrichtungen jeweilige Seite an Seite angeordnete Zugstangen (64, 66), kraftbetätigte Einrichtungen (60, 62) zur selektiven Betätigung der Zugstangen (64, 66), Anschlageinrichtungen (70) an den Zugstangen (64, 66) und Verriegelungseinrichtungen (72, 74) an den Produkteinheit-Halterungen (56) umfassen, daß die Anschlageinrichtungen (70) und die Verriegelungseinrichtungen (72, 74) relativ zueinander zwischen zwei Positionen bewegbar sind, und daß sich in einer dieser Position ein Eingriff mit den Anschlageinrichtungen (70) der einen Zugstange (64) ergibt, während sich in der anderen Position ein Eingriff mit dfen Anschlageinrichtungen (70) der anderen Zugstange (66) ergibt.

9. Vorrichtung nach einem der Ansprüche 5-8, dadurch gekennzeichnet, daß zumindestens eine der Zonen (Z1—Z3) mit einer Wasserbehandlungseinrichtung (38, 40, 42, 44, 46) versehen ist, die Wasser nach unten in Strömen um eine Produkteinheit in der Zone auf einem kontinuierlichen Wasserumlauf-Strömungspfad leitet.

10. Vorrichtung nach Anspruch, dadurch gekennzeichnet, daß das Wasserbehandlungssystem eine Umwälzpumpe (38), Aufbereitungseinrichtungen (46) zur Regulierung der Temperatur des Wassers, einen obenliegenden Flüssigkeitsbehälter (32) in einem oberren Bereich der Zone, der von der Pumpe (38) mit Wasser gespeist wird, und Öffnungen (34) in dem Flüssigkeitstank einschließt, so daß Wasser über den gesamten Bereich der Kammer nach unten strömen und damit eine Produkteinheit behandeln kann, während sie in der Zone verweilt, und daß die Sammeleinrichtungen (36) in einem unteren Bereich der Zone angeordnet sind, um das Wasser zu sammeln und um die pumpe zu speisen.

11. Vorrichtung nach einem der Ansprüche 5—10, gekennzeichnet durch Zustandsmeßeinrichtungen in jeder der Zonen (Z1—Z3), Einrichtungen zur Verbindung der Meßeinrichtungen mit den Steuereinrichtungen (80), und Einrichtungen zur Verbindung der Behandlungseinrichtungen mit den Steuereinrichtungen (80).

12. Vorrichtung nach Anspruch 5, gekennzeichnet durch eine einzige Produkteinheit-Antriebseinrichtung (64) zur Bewegung aller Produkteinheiten, unter Abständen entlang der Produkteinheit-Antriebseinrichtungen (64) angeordnete Anschlageinrichtungen (68), und lösbare Verriegelungseinrichtungen (72a) auf den Produkteinheit-Halterungseinrichtungen (94) zur selektiven Betätigung der lösbaren Verriegelungseinrichtungen (72a) derart, daß die Verriegelungseinrichtungen (72a) mit den Anschlageinrichtungen (68) an den Produkteinheit-Antriebseinrichtungen (64) selektiv kuppelbar und entkuppelbar sind.

**Revendications**

1. Procédé de traitement pour traiter dans une chambre de traitement au moins deux unités ou lots séparés de produits qui comprennent une première unité de produit et une deuxième unité de produit, le procédé comprenant les étapes suivantes:
Réalisation de premières conditions de traitement dans deux zones au moins de la chambre;
Introduction de la première unité de produit dans une première zone et déplacement de la première unité de produit successivement selon des déplacements pas à pas à travers les première et deuxième zones le long d'un axe prédéterminé, cependant qu'un temps de séjour de la première unité de produit dans les première et deuxième zones est atteint avec des valeurs limites prédéterminées pour la durée;
Introduction de la deuxième unité de produit dans la première zone pendant que la première unité de produit séjourne encore dans la deuxième zone, et déplacement pas à pas de la deuxième unité de produit le long du même axe;
caractérisé par le fait que la première unité de produit est déplacée hors de la deuxième zone pendant que la deuxième unité de produit séjourne encore dans la première zone, et par le fait que la deuxième unité de produit est ensuite déplacée dans la deuxième zone, grâce à quoi on obtient un séjour de la première unité de produit dans les première et deuxième zones pendant des premières durées de séjour prédéterminées et un séjour de la deuxième unité de produit dans les première et deuxième zones pendant des deuxièmes durées de séjour prédéterminées qui diffèrent des premières durées de séjour.

2. Procédé selon la revendication 1, caractérisé par les étapes de réalisation de conditions de traitement par ruissellement d'eau à une température prédéterminée dans l'une au moins des zones de la chambre.

3. Procédé selon la revendication 1 ou 2, caractérisé par les étapes de réalisation d'un dispositif exécutant un déplacement continu le long de l'axe, de déplacement de ce dispositif selon des pas prédéterminés et commandés dans le temps, et d'accouplement sélectif des unités de produit au dispositif à des intervalles de temps commandés pour obtenir un déplacement de l'unité de produit à des intervalles commandés dans le temps.

4. Procédé selon l'une des revendications précédentes, caractérisé par les étapes d'enlèvement de la première unité de produit hors de la première zone, de modification des conditions de traitement dans la première zone et d'introduction de la deuxième unité de produit dans la première zone.

5. Dispositif de traitement pour la mise en oeuvre du procédé selon l'une des revendications 1 à 4, comprenant:
Des dispositifs à chambre (10) avec une pluralité de zones de chambre (Z1, Z2, Z3),
Des dispositifs (22, 38, 40, 42, 44, 46) pour réaliser des conditions de traitement prédéterminées dans les diverses zones de la chambre,
Des dispositifs convoyeurs continus (50) qui s'étendent à travers les zones de la chambre et qui constituent un seul axe de convoyage,
Des dispositifs (56) de maintien des unités de produit qui peuvent être maintenus à intervalles sur les dispositifs convoyeurs (50) pour déplacer des unités de produit (54) à travers les zones de la chambre,
Des dispositifs (60, 64, 62, 66) d'entraînement des unités de produit qui peuvent être actionnés pas à pas à des intervalles de temps prédéterminés afin de déplacer les unités de produit (54) le long de l'axe des dispositifs convoyeurs (50) à des intervalles de temps prédéterminés,

caractérisé par le fait que des dispositifs d'accouplement (72, 74) peuvent être amenés en prise de manière sélective entre les dispositifs (56) de maintien des unités de produit et les dispositifs d'entraînement (60, 64, 66), de sorte que les dispositifs (56) de maintien des unités de produit peuvent être déplacés, soit lors des premiers intervalles de temps, soit lors des deuxièmes intervalles de temps qui diffèrent des premiers intervalles de temps, de telle sorte que l'on peut obtenir un séjour de la première unité de produit (54) dans une zone prédéterminée de la chambre pendant un premier temps de séjour prédéterminé et un séjour de la deuxième unité de produit dans la même zone de la chambre pendant un deuxième temps de séjour prédéterminé qui diffère du premier temps de séjour, et par le fait qu'il est prévu des dispositifs de commande (80) pour commander les dispositifs d'entraînement pour un actionnement sélectif commandé dans le temps.

6. Dispositif selon la revendication 5, caractérisé par le fait qu'il est prévu au moins deux zones (Z1, Z2, Z3), et par le fait que chaque zone comprend des dispositifs (22, 38, 40, 42, 44, 46) pour réaliser une condition de traitement prédéterminée dans la zone.

7. Dispositif selon la revendication 5 ou 6, caractérisé par le fait qu'il est prévu des premiers et des deuxièmes dispositifs d'entraînement séparés (60, 64, 62, 66), par le fait que les premiers dispositifs d'entraînement (60, 64) peuvent être amenés en prise avec les dispositifs d'accouplement (72, 74) pour déplacer une première unité de produit aux premiers intervalles de temps, et par le fait que les deuxièmes dispositifs d'entraînement (62, 66) peuvent être amenés en prise avec les dispositifs d'accouplement (72, 74) d'une deuxième unité de produit pour déplacer la deuxième unité de produit aux deuxièmes intervalles de temps.

8. Dispositif selon la revendication 7, caractérisé par le fait que les premiers et deuxièmes dispositifs d'entraînement comprennent à chaque fois des tiges de traction (64, 66) disposées côte à côte, des dispositifs (60, 62) actionnés par une source d'énergie extérieure pour l'actionnement sélectif des tiges de traction (64, 66), des dispositifs de butée (70) sur les tiges de traction (64, 66) et des organes de verrouillage (72, 74) sur les dispositifs (56) de maintien des unités de produit, par le fait que les dispositifs de butée (70) et les organes de verrouillage (72, 74) sont mobiles les uns par rapport aux autres entre deux positions, et par le fait qu'il se produit dans l'une de ces positions un accouplement avec les dispositifs de butée (70) de l'une (64) des tiges de traction, cependant qu'il se produit dans l'autre position un accouplement avec les dispositifs de butée (70) de l'autre tige de traction (66).

9. Dispositif selon l'une des revendications 5 à 8, caractérisé par le fait que l'une au moins des zones (Z1 à Z3) est munie d'un dispositif de traitement par de l'eau (38, 40, 42, 44, 46) qui conduit de l'eau vers le bas en courants autour d'une unité de produit dans la chambre, selon un trajet d'écoulement continu à circulation de l'eau.

10. Dispositif selon la revendication 9, caractérisé par le fait que le système de traitement par de l'eau comprend une pompe de circulation (38), des dispositifs de préparation (46) pour régler la température de l'eau, un réservoir de liquide (32) qui est disposé en haut dans une région supérieure de la zone et qui est alimenté en eau par la pompe (38) et des ouvertures (34) dans le réservoir de liquide, de sorte que de l'eau peut s'écouler vers le bas sur toute la région de la chambre et traiter ainsi une unité de produit pendant qu'elle séjourne dans la zone, et par le fait que les dispositifs collecteurs (36) sont disposés dans une région inférieure de la zone pour rassembler l'eau et pour alimenter la pompe.

11. Dispositif selon l'une des revendications 5 à 10, caractérisé par des dispositifs de mesure des conditions dans chacune des zones (Z1 à Z3), par des dispositifs pour relier les dispositifs de mesure aux dispositifs de commande (80) et par des dispositifs pour relier les dispositifs de traitement aux dispositifs de commande (80).

12. Dispositif selon la revendication 5, caractérisé par un dispositif d'entraînement unique (64) pour le déplacement de toutes les unités de produit, par des dispositifs de butée (68) disposés à intervalles le long des dispositifs d'entraînement (64) des unités de produit, et par des organes de verrouillage amovibles (72a) sur les dispositifs (94) de maintien des unités de produit pour l'actionnement sélectif des organes de verrouillage amovibles (72a), de telle sorte que les organes de verrouillage (72a) peuvent être accouplés et désaccouplés de manière sélective par rapport aux dispositifs de butée (68) ménagés sur les dispositifs d'entraînement (64) des unités de produit.

**Claims**

1. A method of processing at least two separate product units or batches comprising a first product unit and a second product unit, in a processing chamber, the method comprising the following steps:

establishing first processing conditions in at least two zones of said chamber,

introducing said first product unit into a first of said zones and moving said first product unit successively in step-wise movements through said first and second zones along a predetermined axis, whereby to procure a dwell time of said first product unit in said first and second zones for predetermined time limits,

introducing said second product unit into said first zone while said first product unit is still dwelling in said second zone, and moving said second product unit in steps along the same axis,

characterized in that the first product unit is moved out of said second zone while said second product unit is dwelling in the first zone, in that subsequently the second product unit is moved into said second zone, whereby to procure dwelling of said first product unit in said first and second zones for predetermined first dwell times and dwelling of said second unit in said first and second zones for predetermined second dwell times different from said first dwell times.

2. A method as claimed in claim 1, characterized by the steps of establishing water shower processing conditions at a predetermined temperature in at least one of said zones of said chamber.

3. A method as claimed in claim 1 or 2, characterized by the steps of providing a continuous movement means alongside said axis, moving same in predetermined timed steps, and selectively interengaging of said product units with said movement means at timed intervals, to procure movement of said product unit at timed intervals.

4. A method as claimed in any of the preceding claims, characterized by the steps of clearing said first product unit from said first zone, changing said process conditions in said first zone, and introducing said second product unit into said first zone.

5. Processing apparatus for performing the method according to any of the claims 1 through 4, comprising

chamber means (10) defining a plurality of chamber zones (Z1, Z2, Z3),

means (22, 38, 40, 42, 44, 46) for establishing predetermined processing conditions in the individual chamber zones,

continuous conveyor means (50) extending through said chamber zones and defining a single conveyer axis,

product unit support means (56) supportable on said conveyer means (50) at spaced intervals for moving said product units (54) through said chamber zones,

product unit movement means (60, 64, 62, 66) operable in steps at predetermined time intervals to move said product units (54) along said axis of said conveyer means (50) at predetermined time intervals,

characterized in that engagement means (72, 74) are selectively interengageable between said product unit support means (56) and said movement means (60, 64, 66) such that said product unit support means (56) are moveable either at said first or at second time intervals different from said first time intervals, whereby to procure dwelling of said first product unit (54) in a predetermined chamber zone for a predetermined first dwell time and a dwelling of said second product unit in the same chamber zone for a predetermined second dwell time which is different from said first dwell time, and in that control means (80) for controlling said movement means are provided for selective timed operation.

6. Processing apparatus as claimed in claim 5, characterized in that at least two zones (Z1, Z2, Z3) are provided, each said zone having means (22, 38, 40, 42, 44, 45) for establishing a predetermined processing condition in said zone.

7. Processing apparatus as claimed in claim 5 or 6, characterized in that separate first and second movement means (60, 64, 62, 66) are provided, said first movement means (60, 64) being interengageable with said engagement means (72, 74) to move a first product unit at said first time intervals, and said second movement means (62, 66) being interengageable with said engagement means (72, 74) of a second product unit to move said second product unit at said second time intervals.

8. Processing apparatus as claimed in claim 7, characterized in that the first and second movement means comprise respective side-by-side pull rods (64, 66), power operated means (60, 62) for operating said pull rods (64, 66) selectively, abutment means (70) on said pull rods (64, 66), and interlock means (72, 74) on said product unit supports (56), in that said abutment means (70) and said interlock means (72, 74) are relatively moveable between two positions, and in that in one position an interengagement with said abutment means (70) of one said pull rod (64) is procured, whereas in the other position, an interengagement with said abutment means (70) with the other said pull rod (66) is procured.

9. Processing apparatus as claimed in any of the claims 5-8, characterized in that at least one of said zones (Z1—Z3) is provided with a water processing means (38, 40, 42, 44, 46) directing water downwardly in streams around a product unit in said zone in a continuous recirculating water flow path.

10. Processing apparatus as claimed in claim 9, characterized in that said water processing system includes a circulating pump (38), conditioning means (46) for regulating the temperature of the water, a header tank (32) in an upper region of said zone, supplied by said pump (38) with water, and openings (34) in said header tank whereby water may stream downwardly throughout the area of said zone of said chamber thereby processing a product unit as it dwells in said zone, and in that collector means (36) are disposed in a lower region of said zone for collecting said water and supplying said pump.

11. Processing apparatus as claimed in any of the claims 5—10, characterized by condition sensing means in each said zone (Z1—Z3), means connecting said sensing means to said controller (80), and means connecting said processing condition means to said controller (80).

12. Processing apparatus as claimed in claim 5, characterized by a single product unit movement means (64) for moving all said product units, abutment means (68) at spaced intervals along said product unit movement means (64), and releasable latching means (72a) on said product unit support means (94) for selectively operating said releasable latching means (72a) such that said latching means (72a) may be interenganged with said abutment means (68) on said product unit movement means (64) and released therefrom.

FIG.1.

FIG.2.

FIG.3.

FIG.4.

FIG.5.

FIG.6